# EUROPÄISCHE PATENTSCHRIFT

(11) **EP 1 378 766 B1**
(45) Veröffentlichungstag und Bekanntmachung des Hinweises auf die Patenterteilung: **23.01.2008**
(21) Anmeldenummer: 02014625.4
(22) Anmeldetag: 02.07.2002
(51) Int. Cl.: G01T 1/29

(54) **Vorrichtung und Verfahren zum Auslesen von in einer Speicherschicht abgespeicherter Information**
Method and device for reading out the information stored in a storage layer
Dispositif et procédé pour lire les informations contenues dans une couche mémoire

(43) Veröffentlichungstag der Anmeldung: 07.01.2004
(73) Patentinhaber: Agfa-Gevaert HealthCare GmbH, 51373 Leverkusen (DE)
(72) Erfinder: Stahl, Werner, 85551 Heimstetten (DE); Hammer, Heribert, 81371 München (DE)

(56) Entgegenhaltungen:
- EP-A- 1 081 507

## Beschreibung

Die vorliegende Erfindung betrifft eine Vorrichtung und ein Verfahren zum Auslesen von in einer Speicherschicht abgespeicherter Information nach dem Oberbegriff von Patentanspruch 1 bzw. dem Oberbegriff von Patentanspruch 12.

Eine derartige Vorrichtung und ein derartiges Verfahren sind bekannt aus der EP 1 081 507 A2. Diese Druckschrift zeigt eine Vorrichtung, bei der die Empfangsvorrichtung über ein Luftlager, das sich auf der Speicherschicht abstützt, relativ zur Speicherschicht gelagert ist. Der Abstand zwischen der Empfangsvorrichtung und der Speicherschicht soll innerhalb geringer Toleranzen konstant gehalten werden. Dies soll durch einen gleichmäßigen Luftdruck zwischen Luftlager und Speicherschicht gewährleistet werden. Solche Luftlager lassen sich im Hinblick auf den geringen Luftspalt, der in einer Größenordnung von ca. 2 µm liegt, schwerlich entlang der Speicherschicht verschiebbar ausbilden, um somit ein optimales Auslesen von Information zu ermöglichen.

Der vorliegenden Erfindung liegt die Aufgabe zu Grunde, eine Vorrichtung und ein Verfahren der eingangs genannten Art derart weiterzubilden, dass mehrere unterschiedliche Speicherschichten mit gutem Ergebnis ausgelesen werden können.

Diese Aufgabe wird gelöst durch eine Vorrichtung mit den Merkmalen von Patentanspruch 1 sowie durch ein Verfahren mit den Merkmalen von Patentanspruch 12.

Der Erfindung liegt die Erkenntnis zugrunde, dass die obige Aufgabe gelöst werden kann, wenn als Bezugsoberfläche, auf die der Abstand bezogen ist, nicht die Speicherschicht selbst verwendet wird, sondern eine von der Speicherschicht verschiedene Bezugsoberfläche. Vorteilhafterweise kommt hierbei die Ablagefläche in Betracht, auf die die Speicherschicht zumindest während des Auslesens abgelegt ist. Aufgrund des variablen Verstellens des Abstands zwischen Empfangsvorrichtung und Ablagefläche ist es möglich, eine Vielzahl von unterschiedlich dicken Speicherschichten auszulesen. Dazu kann die Dicke der jeweiligen Speicherschicht beim Einstellen des Abstandes zwischen Empfangsvorrichtung und Ablagefläche insofern berücksichtigt werden, als der Abstand so eingestellt wird, dass zwischen Empfangsvorrichtung und den verschiedenen Speicherschichten, insbesondere deren Oberflächen, ein jeweils gleicher Abstand eingestellt wird. Unterschiedliche Dicken der Speicherschichten können bereits durch deren Herstellungsprozesse bedingt sein, die bestimmte Toleranzen nicht unterschreiten.

Eine Speicherschicht weist zwar bei guten Produktionsbedingungen über ihre gesamte Fläche nahezu die selbe Dicke auf. Speicherschichten unterschiedlicher Chargen jedoch weisen unterschiedliche Dicken auf, wobei die Dickenunterschiede in einer solchen Größenordnung liegen, so dass die beim Auslesen erzielbare Bildschärfe beeinträchtigt wird. Weiterhin schwankt die räumliche Position des Fokuspunkts der verwendeten Empfangsvorrichtungen von Empfangsvorrichtung zu Empfangsvorrichtung. Besonders vorteilhaft ist dies im Falle von Service-Einsätzen, wenn sich der Fokus beim Service-Einsatz, beispielsweise durch Austauschen der Empfangsvorrichtung, geändert hat. Der Fokuspunkt kann durch Auswertung eines Testbilds bestimmt werden. Durch die Verstelleinheit ist es möglich, den Fokuspunkt der Empfangsvorrichtung auf einen bestmöglichen Empfang auszurichten und die unterschiedlichen, optimalen Abstände der unterschiedlichen Empfangsvorrichtungen zu den Speicherschichten durch die Verstelleinheit zu berücksichtigen. Im Ergebnis resultiert dies in einem optimalen Bildergebnis.

Die erfindungsgemäße Lösung resultiert weiterhin in dem Vorteil, dass die Bezugsoberfläche im Hinblick auf eine Verwendung von Luftlagern optimiert werden kann. Wie sich nämlich in der Praxis gezeigt hat, ist die Oberfläche der Speicherschichten, beispielsweise Phosphor, nur bedingt geeignet, Luftlager darauf abzustützen. Dies liegt an der Rauhigkeit einer derartigen Oberfläche im Hinblick auf die bei Luftlagern zu fordernde extreme Glätte. Um dies zu verstehen, muss man sich vor Augen halten, dass der Luftspalt besonders bevorzugt zwischen 1 µm und 4 µm beträgt, wobei bereits ein Keilspalt von 2 µm zu Mischreibung führen kann, das heißt, das Lager könnte kratzen. Bei Verwendung einer Bezugsoberfläche, die nicht die Speicherschicht darstellt, kann diese extrem glatt ausgebildet werden, beispielsweise aus Glas. Damit lassen sich für die Abstützung der Empfangsvorrichtung gegenüber der Bezugsoberfläche problemlos Luftlager einsetzen, die in weiteren Vorteilen resultieren, wie weiter unten noch näher ausgeführt werden wird.

Bevorzugt ist die mindestens eine Verstelleinheit mit einer Steuereinheit verbunden, die so ausgelegt ist, dass sie den Abstand im Hinblick auf einen vorgebbaren Sollwert steuert oder regelt. Dadurch wird ermöglicht, dass beispielsweise im Verlauf eines Auslesevorgangs, das heißt beim Ausführen der Relativbewegung zwischen der Empfangsvorrichtung und der Speicherschicht, der Abstand zwischen Empfangsvorrichtung und Speicherschicht gesteuert oder nachgeregelt wird, so dass dieser immer optimal ist.

Bevorzugt umfasst die Vorrichtung eine erste und zweite Verstelleinheit, wobei die erste Verstelleinheit in einer Richtung quer zur Relativbewegung auf der einen Seite des Abtastkopfes, die zweite Verstelleinheit auf der anderen Seite des Abtastkopfes angeordnet ist. Dadurch, dass zwei Verstelleinheiten in dieser Anordnung Verwendung finden, kann der Abstand zwischen Empfangsvorrichtung und Speicherschicht besonders genau eingestellt werden.

Erfindungsgemäß ist die mindestens eine Verstelleinheit über jeweils mindestens eine Lagervorrichtung auf der Bezugsoberfläche gelagert. Bevorzugt Die Lagervorrichtung ist als Luftlager ausgebildet, das derart angeordnet ist, dass im Betrieb der Vorrichtung ein Luftspalt zwischen der Lagervorrichtung und der Ablagefläche ausgebildet ist. Erfindungsgemäße Vorrichtungen werden beispielsweise als digitale Röntgenscanner eingesetzt, welche sehr hohe Ansprüche an die Konstanz der Geschwindigkeit stellen, mit der die Speicherschicht während des Auslesevorgangs ausgelesen wird. Bei üblicherweise verwendeten Gleitlagem wird der Gleichlauf aufgrund des nicht vollständig zu verhindernden Reibungseffektes gestört. Auch alle Arten von Wälzlagern sind nicht rückwirkungsfrei.

Durch die Ablagefläche ist eine xy-Ebene definiert, wobei die Relativbewegung zum Auslesen in x-Richtung erfolgt und mit der Verstelleinheit ein Abstand in z-Richtung einstellbar ist. Bevorzugt umfasst die Lagervorrichtung mindestens zwei Luftlager. Die mindestens zwei Luftlager bilden ein Lagerpaar und sind in z-Richtung beidseits der Ablagefläche angeordnet. Dadurch, dass zwei Luftlager im Sinne von Lager und Gegenlager zusammenwirken, kann erreicht werden, dass die Empfangsvorrichtung sicher nahezu ohne Reibung entlang der Ablagefläche geführt wird.

Eine besonders präzise Abstandseinstellung und ein präziser Transport der Empfangsvorrichtung lassen sich realisieren, wenn der Luftspalt eines Luftlagers zwischen 1 und 5 µm, insbesondere 2 µm beträgt.

Im Hinblick auf das Gewicht der Empfangsvorrichtung ist es bevorzugt, wenn die Vorrichtung eine erste und eine zweite Verstelleinheit umfasst, wobei die erste Verstelleinheit in einer Richtung quer zur Relativbewegung der Empfangsvorrichtung beim Auslesen der Speicherschicht auf der einen Seite der Empfangsvorrichtung und die zweite Verstelleinheit auf der anderen Seite der Empfangsvorrichtung angeordnet ist. Dadurch kann der gewünschte Abstand schneller und genauer eingestellt werden. Dabei ist es bevorzugt, wenn der optimale Abstand für die linke und rechte Hälfte der Empfangsvorrichtung bestimmt und die jeweils zugeordnete Verstelleinheit entsprechend eingestellt wird.

Im Hinblick auf die sehr geringen Dimensionen, um die die Empfangsvorrichtung gegenüber der Speicherschicht zur optimalen und möglichst genauen Justage zu verstellen ist, ist es bevorzugt, wenn die Verstelleinheit eine Spindel mit sehr geringer Steigung aufweist, die derart mit einer Lagervorrichtung verbunden ist, dass die Empfangsvorrichtung um den Verbindungspunkt mit der Lagervorrichtung rotiert werden kann. Bei einer bevorzugten Ausführungsform wirkt die Spindel auf mindestens zwei parallel geführte Verbindungselemente. Es können aber auch andere Verstellmechanismen eine präzise Verstellung im µm-Bereich ermöglichen.

Die erfindungsgemäßen Maßnahmen ermöglichen vorteilhafterweise eine präzise Einstellung des Abstands zwischen Empfangsvorrichtung und Speicherschicht unabhängig von der Ausrichtung - beispielsweise horizontal oder vertikal - der Ablagefläche, auf der die Speicherschicht zumindest während des Auslesevorgangs abgelegt ist.

Die Verstelleinheit kann beispielsweise auf zwei unterschiedlichen Mechanismen basieren. Einerseits kann die Verstelleinheit mindestens eine Abstandsbestimmungseinheit umfassen, die ausgelegt ist, den Abstand zwischen der Speicherschicht und der Empfangsvorrichtung zu bestimmen. Hierbei ist bevorzugt, wenn die Abstandsbestimmungseinheit mindestens ein Messrad zur Abstandsbestimmung oder eine Vorrichtung zur berührungslosen Abstandsmessung umfasst. Alternativ kann die Verstelleinheit mindestens ein Normierungselement, insbesondere einen Präzisionstaster umfassen. Er kann dann derart auf die Speicherschicht wirken, dass damit eine Abstandsnormierung durchführbar ist, von der ausgehend ein gewünschter Abstand einstellbar ist.

Der Abstand zwischen Speicherschicht und Empfangsvorrichtung setzt sich aus einem Beitrag, der von der Lagervorrichtung, beispielsweise einem Luftlager, herrührt und einem Beitrag von der Verstelleinheit zusammen.

Bei dem erfindungsgemäßen Verfahren kann vorgesehen sein, dass die Abstandseinstellung für jede Speicherschicht vor dem Auslesevorgang festgelegt und während des Auslesevorgangs beibehalten wird. Es kann jedoch auch vorgesehen sein, den Abstand zwischen Speicherschicht und Empfangsvorrichtung während des Auslesevorgangs nachzuregeln. Eine kontinuierliche Nachregelung führt zu noch besseren Ergebnissen.

Bevorzugt ist weiterhin, wenn der gemessene Abstand oder das Normierungsergebnis in einem der Speicherschicht zugeordneten Speicher abgelegt wird. Damit muss bei wiederholtem Auslesen der selben Speicherschicht kein Mess- oder Normierungsschritt vorausgehen. Vielmehr genügt die Übermittlung des Abstands oder des Normierungsergebnisses von dem Speicher an die erfindungsgemäße Auslesevorrichtung und anschließende Annäherung der Speicherschicht an die Auslesevorrichtung unter Verwendung eines Transponders.

Weitere vorteilhafte Ausführungsformen ergeben sich aus den Unteransprüchen.

Im Nachfolgenden werden Ausführungsbeispiele der Erfindung unter Bezugnahme auf die Zeichnungen beschrieben.

Es zeigen:
- Fig. 1: in schematischer perspektivischer Darstellung eine erste Ausführungsform einer erfindungsgemäßen Vorrichtung zum Auslesen von in einer Speicherschicht abgespeicherter Information;
- Fig. 2a - 2c: eine zweite Ausführungsform einer erfindungsgemäßen Vorrichtung nach sukzessivem Abbau von Teilen der erfindungsgemäßen Vorrichtung;
- Fig. 3a - 3d: eine mit der Darstellung von Figur 2b korrespondierende Darstellung der Lagerung der Empfangsvorrichtung, wobei aus den Darstellungen der Figur 3b - 3d Details deutlich zu erkennen sind;
- Fig. 4: die Darstellung von Figur 3a in teilweise geschnittener Darstellung in Frontansicht;
- Fig. 5a, b: eine detailliertere Darstellung von Einzelheiten der Figur 3b;
- Fig. 6: eine detaillierte Darstellung eines bevorzugt verwendeten Luftlagers;
- Fig. 7a, b: in Seitenansicht und perspektivischer Darstellung einen bevorzugt bei der erfindungsgemäßen Vorrichtung zu verwendenden Präzisionstaster;

- Fig. 8: in detaillierter Darstellung eine bevorzugt verwendbare Verstelleinheit; und
- Fig. 9: in schematischer Darstellung das durch die Verwendung von Luftlagern ermöglichte Pendeln der Empfangsvorrichtung, beispielhaft gezeigt am Pendeln um die z-Achse.

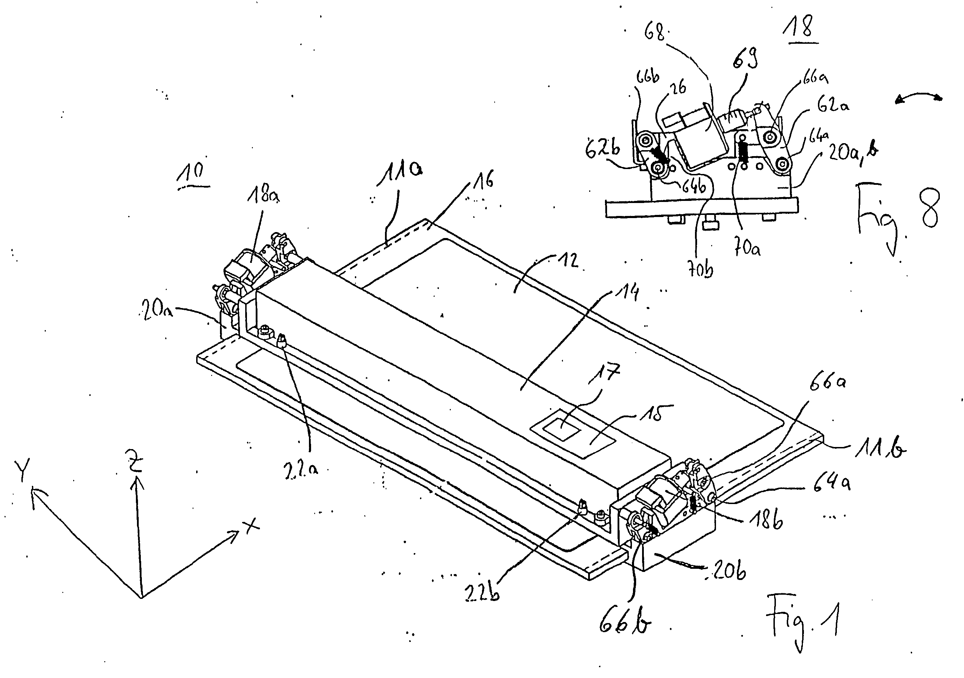

Figur 1 zeigt einen digitalen Scanner 10 für Röntgenanwendungen als erfindungsgemäße Vorrichtung zum Auslesen von in einer Speicherschicht 12, die auf einer Ablagefläche 16 angeordnet ist, abgespeicherter Information. Die Ablagefläche 16 spannt eine x-y-Ebene auf. Eine z-Richtung verläuft senkrecht zu dieser x-y-Ebene. Der Scanner 10 umfasst einen Abtastkopf 14, in dem eine Empfangsvorrichtung zum Empfangen einer von der Speicherschicht 12 ausgesandten Emissionsstrahlung angeordnet ist. Die Empfangsvorrichtung kann eine CCD-Zeile mit vorgeschalteten Abbildungsoptiken enthalten. Eine Strahlungsquelle zum Aussenden von einer Anregungsstrahlung ist ebenfalls in dem Abtastkopf 14 angeordnet, oder bei einem Durchlichtscanner unterhalb der Ablagefläche 16. Die Strahlungsquelle kann eine Vielzahl von nebeneinander angeordneten Laserdioden aufweisen, deren Strahlungen über Optiken auf die Speicherschicht 12 geführt werden, wobei eine Zeile der Speicherschicht 12 anregbar ist. Der Abtastkopf 14 ist über eine erste und eine zweite Verstelleinheit 18a, 18b mit einer ersten und einer zweiten Lagervorrichtung 20a, 20b verbunden, mit denen der Abtastkopf 14 auf der Ablagefläche 16 geführt wird. Die beiden Lagervorrichtungen 20a, 20b sind dabei in zwei Randbereichen 11a und 11b der Ablagefläche 16 angeordnet. Dadurch ist gewährleistet, dass der Verlauf der Randbereiche 11a, 11b in z-Richtung exakt mit dem Verlauf der Ablagefläche 16 übereinstimmt. Das jeweilige Niveau in z-Richtung der Randbereiche 11a, 11b stimmt mit dem Niveau in z-Richtung der Ablagefläche 16 überein. Während eines Auslesevorgangs wird der Abtastkopf 14 in x-Richtung über die Speicherschicht 12 geführt, angetrieben von einer nicht dargestellten Antriebsvorrichtung. Die Ablagefläche 16 ist hier vorteilhafterweise aus Glas gefertigt. Die Oberfläche von Glas kann besonders glatt gefertigt werden und gewährleistet somit eine besonders exakte Führung des Abtastkopfes 14. Fig. 1 zeigt weiterhin ein Steuermittel 15 das zum Steuern des Auslesens der Speicherschicht 12 mittels des Scanners 10 dient. Das Steuermittel 15 ist hier auf dem Abtastkopf 14 angebracht und enthält einen Speicher 17, in dem verschiedene für das Auslesen benötigte Informationen abgespeichert sind und auf den das Steuermittel 15 bei Bedarf zugreifen kann. Auf die Bedeutung eines ersten und zweiten Präzisionstasters 22a, 22b wird weiter unten detaillierter eingegangen werden. Dabei ist es allerdings möglich, statt zweier Präzisionstaster auch nur einen einzigen einzusetzen.

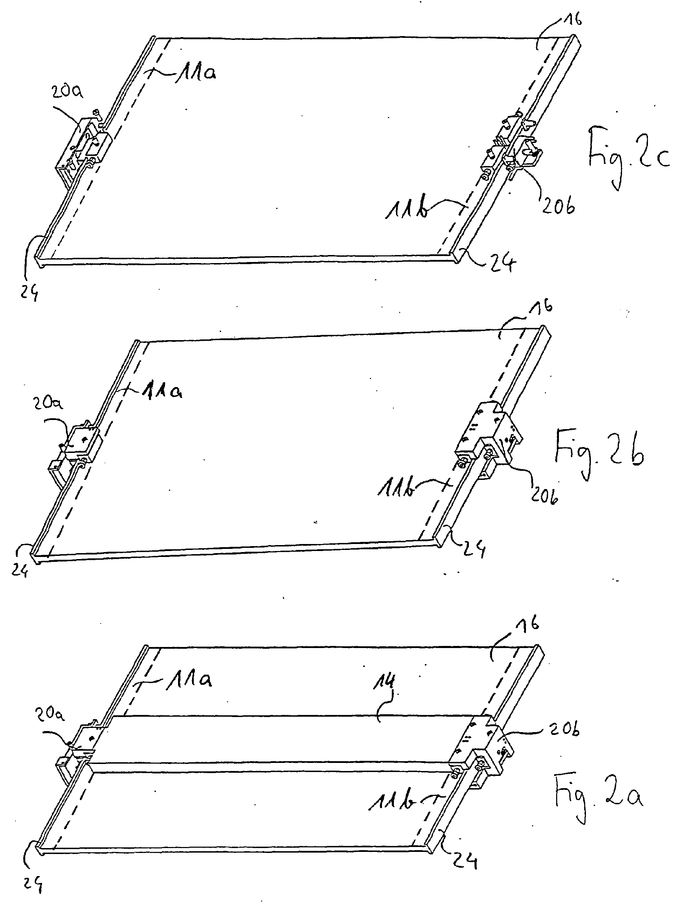

Die Figuren 2a bis 2c zeigen einen Aufbau der erfindungsgemäßen Vorrichtung, bei der die Ablagefläche 16 an den beiden Endseiten in y-Richtung zur besonders einfachen Lagerung und Führung des Abtastkopfs 14 gegenüber der Ablagefläche 16 ausgeprägte Randabschlüsse 24 aufweist. Diese Randabschlüsse 24 dienen der Führung des Abtastkopfes 14 in y-Richtung. Figur 2a zeigt den Abtastkopf 14 nach Abnahme seiner Abdeckkappe. Die Verstelleinheiten 18a, 18b wurden ebenfalls entfernt und sind somit nicht dargestellt. Figur 2b zeigt die Anordnung von Figur 2a ohne Abtastkopf 14, während Figur 2c die Anordnung von Figur 2b zeigt, wobei die Gehäuseabdeckungen der linken und der rechten Lagervorrichtung 20a, 20b entfernt wurden.

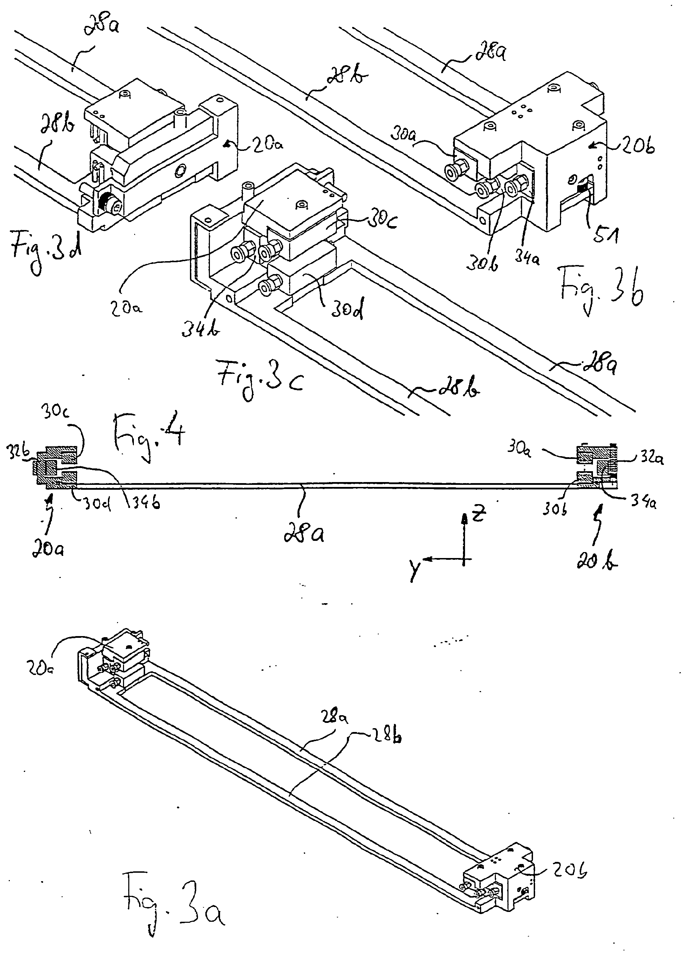

Figur 3a korrespondiert mit der Darstellung von Figur 2b, wobei jedoch die Ablagefläche 16 in der Darstellung entfernt wurde. Zu erkennen ist, dass die linke und die rechte Lagervorrichtung 20a, 20b über zwei Stege 28a, 28b miteinander verbunden sind. Figur 3b zeigt die rechte Lagervorrichtung 20b und Figur 3c die linke Lagervorrichtung 20a von Figur 3a detaillierter. Die rückwärtige Ansicht der linken Lagervorrichtung 20a ist in Figur 3d dargestellt.

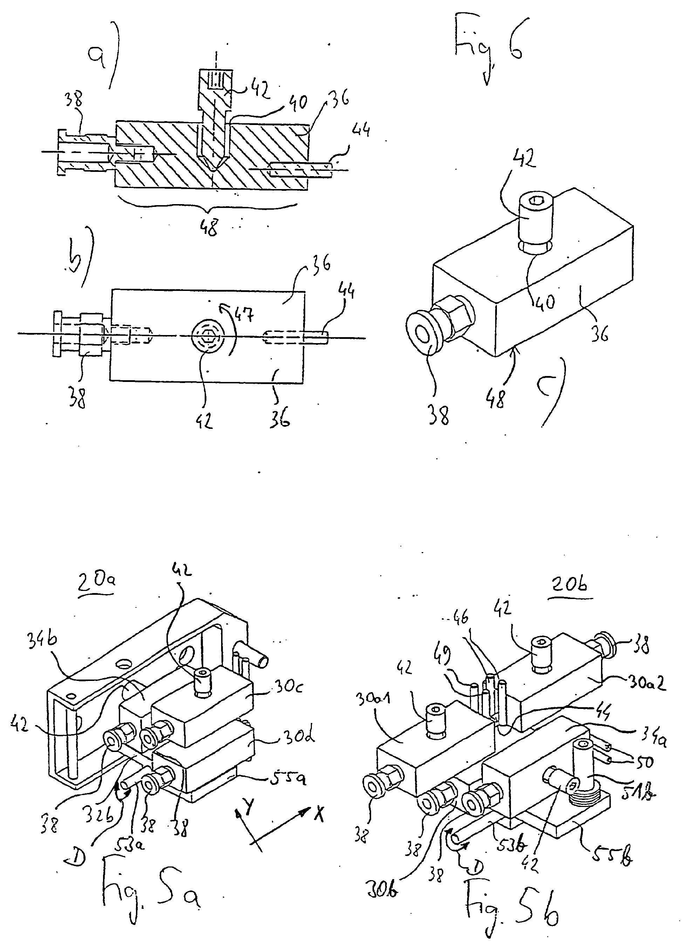

Figur 4 zeigt schematisch eine teilweise geschnittene Frontansicht der Darstellung von Figur 3a, aus der erkennbar ist, dass die Lagervorrichtungen 20a und 20b über zwei in z-Achsenrichtung zusammenwirkende Luftlager 30a, 30b bzw. 30c, 30d verfügen. Über eine Verbindung 32a der rechten Lagervorrichtung 20b sind deren Luftlager 30a, 30b und über eine Verbindung 32b der linken Lagervorrichtung 20a sind deren Luftlager 30c, 30d in z-Achsenrichtung federnd gegeneinander vorgespannt. Kräfte zur Erzeugung der Vorspannungen können beispielsweise mittels Tellerfedern realisiert werden, die auf die Verbindungen 32a und 32b wirken. Der im Betrieb durch die Luftlager jeweils erzeugte Luftdruck bildet Gegenkräfte zu den von den Tellerfedern erzeugten Kräften. In y-Richtung wirken zwei Luftlager 34a, 34b im Sinne eines Lagers und eines Gegenlagers zusammen. Die Luftlager 34a, 34b in y-Richtung sind ebenfalls federnd gegeneinander vorgespannt. Die Ablagefläche 16, auf die sich die verschiedenen Luftlager abstützen, ist durch die Luftlagerpaare quasi wie zwischen einer Zange eingespannt.

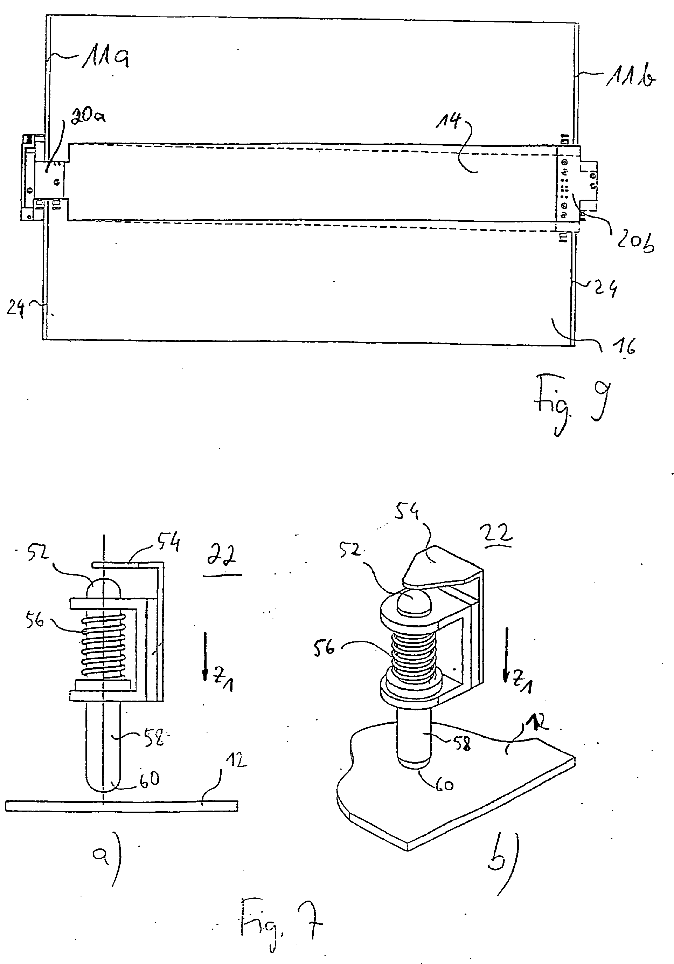

Figur 5a zeigt die Luftlager 30c, 30d und 34b der linken Lagervorrichtung 20a, Figur 5b die Luftlager 30a1, 30a2, 30b und 34a der rechten Lagervorrichtung 20b mit größerer Genauigkeit. Eines der verwendeten Luftlager ist stellvertretend in den Figuren 6a bis c dargestellt und , ohne Spezifikation seiner Einbaustelle in einer der Lagervorrichtungen 20a, 20b, allgemein mit der Bezugsziffer 36 bezeichnet. Das Luftlager 36 umfasst einen Luftanschluss 38 sowie eine Lagerung 40, in der beispielhaft zur Erzielung einer punktförmigen Lagerung eine Kegelschraube 42 angeordnet ist, die mit der zugehörigen Gehäuseabdeckung der jeweiligen Lagervorrichtung 20a, 20b und damit dem zu lagernden Abtastkopf 14 starr zu verbinden ist. Dazu ist in den Kopf der Kegelschraube 42 ein Gewinde eingebracht. Durch die punktförmige Lagerung über die Spitze der Kegelschraube 42 wird ein selbstjustierendes Lager realisiert.

Figur 6b zeigt eine Draufsicht des Luftlagers 36. In dem Luftlager 36 ist eine Verdrehsicherung 44 angeordnet, um zu verhindern, dass das Luftlager 36 in der in Figur 6b mit einem Pfeil 47 gekennzeichneten Richtung rotiert. Die Luftauslassseite des Luftlagers 36 ist mit dem Bezugszeichen 48 gekennzeichnet. Sie enthält Luftausströmöffnungen, durch die über den Luftanschluss 38 in das Lager eingeführte Luft ausgeblasen wird.

Zurück zur Darstellung in Figur 5b: Zu erkennen ist, dass das obere Luftlager 30a (siehe Figur 4) hier zwei Luftlager 30a1, 30a2 umfasst, die in x-Richtung nebeneinander angeordnet sind. Dadurch wird sichergestellt, dass der Abtastkopf 14 während der Aktivierung der Luftlager nicht um die y-Achse kippt. Der oben allgemein beschriebenen Verdrehsicherung 44 entsprechen hier Verdrehsicherungen 46 für das Luftlager 30a2, Verdrehsicherungen 49 für das Luftlager 30a1 und Verdrehsicherungen 50 für das Luftlager 34a. Die Verdrehsicherungen 46, 49, 50 sind an ihren in der Fig. 5b dargestellten jeweiligen Enden mit der nicht dargestellten Gehäuseabdeckung der Lagervorrichtung 20b befestigt. Die Kegelschrauben 42 der Figuren 5a, 5b werden über die Verbindungen 32a, 32b, mit der Lager und Gegenlager miteinander verbunden sind, mit dem Abtastkopf 14 verbunden.

Die Fig. 5b zeigt des Weiteren eine Tellerfeder 51b, die zur Erzeugung einer Kraft zur Realisierung einer Vorspannung des Luftlagerpaares 30a1, 30a2 und 30b in z-Richtung dient. Die Tellerfeder 51b ist an ihrer Oberseite mit einem Gewinde versehen, über das die Tellerfeder 51b an der Gehäuseabdeckung der Lagervorrichtung 20b befestigt werden kann (siehe auch Darstellung in Fig. 3b). Die von der Tellerfeder 51b erzeugte Kraft wird hier über eine Verbindungsplatte 55b auf das Luftlager 30b übertragen, das mit der Verbindungsplatte 55b verbunden ist. Die Verbindungsplatte 55b ist dabei mit einer in x-Richtung verlaufenden Drehachse 53b verbunden, die ein Verkippen der Verbindungsplatte 55b und damit des Luftlagers 30b entlang einer Drehrichtung D ermöglicht. Die Drehachse 53b ist an ihren beiden Enden in dem (nicht dargestellten) Gehäuse der Lagervorrichtung 20b befestigt. Die von den Luftlagern 30a1, 30a2 und 30b im Betrieb erzeugten Luftdrücke bilden eine Gegenkraft zu der durch die Tellerfeder 51 b erzeugten Kraft. Dadurch entsteht die zangenförmige Lagerung der Ablagefläche 16, die sich zwischen den Lagern 30a1, 30a2 und 30b befindet. Eine der Tellerfeder 51b entsprechende weitere Tellerfeder (nicht dargestellt), eine Verbindungsplatte 55a sowie eine Drehachse 53a sind für die Lagervorrichtung 20a vorgesehen, um auch da die zangenförmige Lagerung der Ablagefläche 16 zu gewährleisten.

Figuren 7a und 7b zeigen eine Ausführungsform eines bereits in Figur 1 dargestellten Präzisionstasters 22. Der Präzisionstaster 22 ist mit dem Abtastkopf 14 ortsfest verbunden, wobei vorteilhafterweise vorgesehen sein kann, dass der Präzisionstaster in y-Richtung verschiebbar angeordnet ist. Zur Normierung des Abstands zwischen der Speicherschicht 12 und der im Abtastkopf 14 enthaltenen Empfangsvorrichtung wird der Abtastkopf 14, der mit dem Präzisionstaster 22 verbunden ist, soweit in z₁-Richtung, d. h. in Richtung der Speicherschicht 12, abgesenkt, bis eine Oberseite 52 eines Kontaktstifts 58 mit einer Kontaktfeder 54 in Kontakt tritt. In diesem Fall ist eine Unterseite 60 des Kontaktstifts 58 mit der Speicherschicht 12 in Kontakt. Eine Feder 56 sorgt dafür, dass ohne entsprechenden Druck auf die Unterseite 60 des Kontaktstifts 58, d. h. ohne Widerstand durch die Speicherschicht 12, die Oberseite 52 des Kontaktstifts 58 und die Kontaktfeder 54 nicht in Kontakt sind. Nach einer derart durchgeführten Normierung wird mittels der in Figur 8 dargestellten Verstelleinheit 18 ein optimaler Abstand zwischen Speicherschicht 12 und Empfangsvorrichtung des Abtastkopfes 14 eingestellt, indem der Abtastkopf 14 nach Berühren der Kontaktfeder 54 durch die Oberseite 52 des Kontaktstifts 58 um den optimalen Abstand in entgegengesetzter z₁-Richtung zurückgefahren wird. Dadurch ergibt sich zwischen der Unterseite 60 des Kontaktstiftes 58 und der Speicherschicht 12 ein Abstand. Das Einstellen des optimalen Abstands wird einfachheitshalber durch das Steuermittel 15 (Fig. 1) gesteuert. Der optimale Abstand kann durch eine zuvor durchgeführte Kalibrierung des Scanners ermittelt worden sein. Durch den optimalen Abstand wird insbesondere gewährleistet, dass die Bildschärfe beim Auslesen der Speicherschicht 12 sehr gut und möglichst über die gesamte Fläche der Speicherschicht 12 gleich ist.

Mit Bezug auf Figur 8 umfasst die Verstelleinheit 18 zwei parallel geführte Stangen 62a, 62b, die einerseits über Lager 64a, 64b mit einer der Lagervorrichtungen 20a, 20b, andererseits über Lager 66a, 66b an den Abtastkopf 14 gekoppelt sind. Durch einen Schrittmotor 68 mit integrierter Spindel 69 kann die Stange 62a ausgelenkt werden, wobei diese Bewegung als korrespondierende Auslenkung auf die Stange 62b übertragen wird. Damit lässt sich der Abstand zwischen Speicherschicht 12 und Empfangsvorrichtung, d. h. Abtastkopf 14, hochpräzise einstellen. Federn 70a, 70b sorgen für eine möglichst spielfreie Verspannung der Verstelleinheit 18.

Eine derartige Abstandseinstellung kann für verschiedene Speicherschichten jeweils vor Beginn eines Auslesevorgangs erfolgen, wobei während des Auslesevorgangs der Abstand vorteilhafterweise beibehalten wird. Dies verbessert die Auslesequalität, da verschiedene Speicherschichten produktionsbedingt insbesondere verschiedene Dicken haben, so dass bei unterschiedlichen Speicherschichten 12 unterschiedliche Abstände zwischen der Oberfläche der jeweiligen Speicherschicht 12 und der in dem Abtastkopf 14 enthaltenen Empfangsvorrichtung vorliegen würden. Der Abstand kann während eines Auslesevorgangs vorteilhafterweise nachgeregelt werden. Dies erfolgt einfachheitshalber mittels des Steuermittels 15. Insbesondere für die Realisierung der letztgenannten Variante ist es von Vorteil, wenn der Abstand während eines Abtastvorgangs kontinuierlich bestimmt wird. Dazu eignet sich beispielsweise eine mechanische Abtastung durch ein Messrad, das mit minimaler Auflagekraft auf der Oberfläche der Speicherschicht 12 während des Abtastvorgangs mitläuft und das Niveau der Speicherschicht auf ein Messsystem überträgt. Alternativ kann auch eine berührungslose Abstandsmessung verwendet werden, wobei jedoch darauf zu achten ist, dass dadurch die Speicherschicht nicht zur Emission von Strahlung angeregt wird.

Es kann vorgesehen sein, dass für wiederholte Auslesevorgänge der selben Speicherschicht 12 das Ergebnis der vorher durchgeführten Normierung, beziehungsweise der Abstandsmessung, in einem Speicher 17 (siehe Fig. 1) abgelegt und der Speicherschicht zugeordnet wird. Besonders vorteilhaft lässt sich dies realisieren, wenn die Speicherschicht 12 in einer Kassette gelagert wird und diese Kassette über einen derartigen Speicher verfügt. Die Kassette wird zum Auslesen der in ihr enthaltenen Speicherschicht 12 in den erfindungsgemäßen Scanner eingeführt und die Speicherschicht 12 anschließend aus der Kassette heraus- und in den Scanner hineingezogen. Eine Übertragung des in dem Speicher abgelegten Ergebnisses der zuvor durchgeführten Abstandsmessung oder Normierung kann einfachheitshalber durch einen Transponder auf die erfindungsgemäße Vorrichtung zum Auslesen der Information aus der Speicherschicht übertragen werden. Es ist aber auch möglich, das Ergebnis der zuvor durchgeführten Abstandsmessung oder der Normierung nach der Durchführung in dem Speicher 17 des Scanners abzuspeichern. Nach einem erneuten Erkennen der zugeordneten Speicherschicht kann der abgespeicherte Abstand des Abtastkopfes 14 zu der Ablagefläche 16 abgerufen und eingestellt werden.

Figur 9 zeigt, dass durch die Verwendung von Luftlagern ein Pendeln des Abtastkopfes 14 um die z-Achse ermöglicht wird, ohne dass es zu einem Slip-Stick-Effekt kommt. Dadurch ist die erfindungsgemäße Vorrichtung besonders auch für einen beidseitigen Antrieb der Empfangsvorrichtung 26 geeignet.

Für den Fall, dass über einen der Speicherschicht zugeordneten Transponder signalisiert wird, dass für die entsprechende Speicherschicht noch keine Normierung beziehungsweise Abstandsmessung vorgenommen wurde, kann vorgesehen sein, dass dies automatisch von der erfindungsgemäßen Auslesevorrichtung initiiert wird.

## Patentansprüche

1. Vorrichtung (10) zum Auslesen von in einer Speicherschicht (12) abgespeicherter Information mit
einer Ablagefläche (16) zum Ablegen der Speicherschicht (12) und
einer Empfangsvorrichtung (14) zum Empfangen einer von der Speicherschicht (12) ausgesandten Emissionsstrahlung,
**dadurch gekennzeichnet, dass**
die Vorrichtung mindestens eine Verstelleinheit (18) zum variablen Verstellen des Abstands zwischen der Empfangsvorrichtung (14) und der Ablagefläche (16) aufweist, wobei die mindestens eine Verstelleinheit (18) über jeweils mindestens ein Luftlager (30a-30d) auf der Ablagefläche (16) gelagert ist und das Luftlager (30a-30d) derart angeordnet ist, dass im Betrieb der Vorrichtung (10) ein Luftspalt zwischen dem Luftlager (30a-30d) und der Ablagefläche (16) ausgebildet wird.

2. Vorrichtung nach Anspruch 1,
**dadurch gekennzeichnet,**
**dass** die Verstelleinheit (18) so ausgestaltet ist, dass sie den Abstand zwischen der Empfangsvorrichtung (14) und der Ablagefläche (16) so verstellt, dass ein vorgegebener Abstand zwischen der Empfangsvorrichtung (14) und der auf der Ablagefläche (16) abgelegten Speicherschicht (12) vorhanden ist.

3. Vorrichtung nach Anspruch 1 oder 2,
**dadurch gekennzeichnet,**
**dass** sie weiterhin eine Antriebsvorrichtung zum Erzeugen einer Relativbewegung zwischen der Empfangsvorrichtung (14) und der Speicherschicht (12) und
ein Führungsmittel (20a, 20b) zum Führen der Empfangsvorrichtung (14) oder der Speicherschicht (12) auf einer Führungsfläche (16) während des Erzeugens der Relativbewegung aufweist.

4. Vorrichtung nach Anspruch 3,
**dadurch gekennzeichnet,**
**dass** die Führungsfläche (16) von der Speicherschicht (12) unabhängig ist.

5. Vorrichtung nach Anspruch 3 oder 4,
**dadurch gekennzeichnet,**
**dass** die Verstelleinheit (18) eine Spindel (69), insbesondere mit zwei parallel geführten Verbindungselementen (62a, 62b) aufweist, die derart mit dem Führungsmittel (20a, 20b) verbunden ist, dass die Empfangsvorrichtung (14) um einen Verbindungspunkt (64a, 64b) mit dem Führungsmittel (20a, 20b) rotierbar ist.

6. Vorrichtung nach einem der Ansprüche 3 bis 5,
**dadurch gekennzeichnet,**
**dass** durch die Ablagefläche (16) eine x-y-Ebene definiert ist,
die Antriebsvorrichtung so ausgestaltet ist, dass sie die Relativbewegung in x-Richtung erzeugt, und
die Vorrichtung wenigstens zwei Verstelleinheiten (18a, 18b, 20a, 20b) aufweist, wobei eine erste Verstelleinheit (18a, 20a) in y-Richtung auf der einen Seite der Empfangsvorrichtung (14) und eine zweite Verstelleinheit (18b, 20b) auf der anderen Seite der Empfangsvorrichtung (14) angeordnet ist.

7. Vorrichtung nach einem der vorhergehenden Ansprüche,
**dadurch gekennzeichnet,**
**dass** eine Steuereinheit (15) zum Steuern oder Regeln des Abstands vorhanden und die Verstelleinheit (18) mit der Steuereinheit (15) verbunden ist.

8. Vorrichtung nach einem der vorhergehenden Ansprüche,
**dadurch gekennzeichnet,**
**dass** die Verstelleinheit (18) ein Normierungselement (22), insbesondere einen Präzisionstaster, zum Feststellen der Position der Oberfläche der auf der Ablagefläche (16) abgelegten Speicherschicht (12) umfaßt.

9. Vorrichtung nach Anspruch 8,
**dadurch gekennzeichnet,**
**dass** die Verstelleinheit (18) derart ausgestaltet ist, dass sie ausgehend von der festgestellten Position der Oberfläche der Speicherschicht den vorgegebenen Abstand zwischen Empfangsvorrichtung (14) und Speicherschicht (12) einstellt.

10. Vorrichtung nach einem der Ansprüche 8 oder 9,
**dadurch gekennzeichnet,**
**dass** sie einen Speicher (17) zum Abspeichern der festgestellten Position der Oberfläche der Speicherschicht (12) oder ein Abspeichern der Position der Empfangsvorrichtung (14) nach dem Einstellen des vorgegebenen Abstands aufweist.

11. Vorrichtung nach Anspruch 10,
**dadurch gekennzeichnet,**
**dass** die Verstelleinheit (18) derart ausgestaltet ist, dass das Einstellen des vorgegebenen Abstands zum Auslesen der Speicherschicht (12) mittels der zuvor in dem Speicher (17) abgespeicherten Position der Oberfläche der Speicherschicht (12) oder der zuvor in dem Speicher (17) abgespeicherten Position der Empfangsvorrichtung (14) nach dem Einstellen des vorgegebenen Abstands erfolgt.

12. Verfahren zum Auslesen von in einer Speicherschicht (12) abgespeicherter Information, folgende Schritte umfassend:
Ablegen der Speicherschicht (12) auf einer Ablagefläche (16) und
Empfangen einer von der Speicherschicht (12) ausgesandten Emissionsstrahlung mittels einer Empfangsvorrichtung (14),
**dadurch gekennzeichnet,**
**dass** ein Abstand zwischen der Empfangsvorrichtung (14) und der Ablagefläche (16) variabel verstellt wird, wobei die Empfangsvorrichtung (14) über mindestens ein Luftlager (30a-30d) auf der Ablagefläche (16) gelagert ist und im Betrieb der Vorrichtung (10) ein Luftspalt zwischen dem Luftlager (30a-30d) und der Ablagefläche (16) ausgebildet wird.

13. Verfahren nach Anspruch 12,
**dadurch gekennzeichnet,**
**dass** die Position der Oberfläche der Speicherschicht (12) festgestellt und in deren Kenntnis der vorgegebene Abstand eingestellt wird.

14. Verfahren nach einem der Ansprüche 12 oder 13,
**dadurch gekennzeichnet,**
**dass** das Einstellen des vorgegebenen Abstands während eines Auslesevorgangs wiederholt wird.

## Claims

1. A device (10) for reading out information stored in a storage layer (12) comprising
a delivery surface (16) for delivering the storage layer (12) and
a receiving device (14) for receiving an emission radiation emitted by the storage layer (12),
**characterised in that**
said device exhibits at least one adjustment unit (18) for the variable adjustment of the distance between the receiving device (14) and the delivery surface (16), the at least one adjustment unit (18) being mounted via in each case at least one air bearing (30a-30d) on the delivery surface (16) and the air bearing (30a-30d) being arranged in such a way that during operation of the device (10) an air gap is formed between the air bearing (30a-30d) and the delivery surface (16).

2. Device according to claim 1, wherein the adjustment unit (18) is designed so that it adjusts the distance between the receiving device (14) and the delivery surface (16) in such a way that a preset distance is present between the receiving device (14) and the storage layer (12) delivered on the delivery surface (16).

3. Device according to claim 1 or 2, further comprising
a drive device for producing a relative movement between the receiving device (14) and the storage layer (12), and
a guide means (20a, 20b) for guiding the receiving device (14) or the storage layer (12) on a guide surface (16) while the relative movement is being produced.

4. Device according to claim 3, wherein the guide surface (16) is independent of the storage layer (12).

5. Device according to claim 3 or 4, wherein the adjustment unit (18) exhibits a spindle (69), in particular having two connecting elements (62a, 62b) that are guided in parallel, which are connected to the guide means (20a, 20b) in such a way that the receiving device (14) can be rotated about a point of connection (64a, 64b) with the guide means (20a, 20b).

6. Device according to any of claims 3 to 5, wherein
an x-y plane is defined by the delivery surface (16),
the drive device is designed so that it produces the relative movement in the x direction, and
said device exhibits at least two adjustment units (18a, 18b, 20a, 20b), a first adjustment unit (18a, 20a) being arranged on one side of the receiving device (14) in the y direction and a second adjustment unit (18b, 20b) being arranged on the other side of the receiving device (14).

7. Device according to any of the preceding claims, wherein a control unit (15) is present for controlling or regulating the distance and the adjustment unit (18) is connected to the control unit (15).

8. Device according to any of the preceding claims, wherein the adjustment unit (18) comprises a scaling element (22), in particular a high-precision feeler, for determining the position of the surface of the storage layer (12) delivered on the delivery surface (16).

9. Device according to claim 8, wherein the adjustment unit (18) is designed in such a way that it adjusts the preset distance between receiving device (14) and storage layer (12) on the basis of the determined position of the surface of the storage layer.

10. Device according to any of claims 8 and 9, further comprising a memory (17) for storing the determined position of the surface of the storage layer (12) or for storing the position of the receiving device (14) after the adjustment of the preset distance.

11. Device according to claim 10, wherein the adjustment unit (18) is designed in such a way that the adjustment of the preset distance for the readout of the storage layer (12) is effected by means of the position of the surface of the storage layer (12) previously stored in the memory (17) or the position of the receiving device (14) previously stored in the memory (17) after the adjustment of the preset distance.

12. A method for reading out information stored in a storage layer (12) comprising the following steps :
delivering the storage layer (12) on a delivery surface (16) and receiving an emission radiation emitted by the storage layer (12) by means of a receiving device (14),
**characterised in that**
a distance between the receiving device (14) and the delivery surface (16) is variably adjusted, the receiving device (14) being mounted on the delivery surface (16) via at least one air bearing (30a-30d) and an air gap being formed between the air bearing (30a-30d) and the delivery surface (16) during the operation of the device (10).

13. Method according to claim 12, wherein the position of the surface of the storage layer (12) is determined and the preset distance is adjusted on the basis of that information.

14. Method according to any of claims 12 and 13, wherein the adjustment of the preset distance is repeated during a readout operation.

## Revendications

1. Dispositif (10) pour lire des informations stockées dans une couche mémoire (12) comprenant une surface de dépôt (16) pour le dépôt de la couche mémoire (12) et un dispositif de réception (14) pour la réception d'un rayonnement d'émission envoyé par la couche mémoire (12), **caractérisé en ce que** le dispositif présente au moins une unité de réglage (18) pour le réglage variable de la distance entre le dispositif de réception (14) et la surface de dépôt (16), la au moins une unité de réglage (18) étant fixée sur la surface de dépôt (16) par respectivement au moins un palier d'air (30a-30d) et le palier d'air (30a-30d) étant disposé de telle sorte que, pendant le fonctionnement du dispositif (10), une fente d'aération est réalisée entre le palier d'air (30a-30d) et la surface de dépôt (16).

2. Dispositif selon la revendication 1, **caractérisé en ce que** l'unité de réglage (18) est conçue de telle sorte qu'elle règle la distance entre le dispositif de réception (14) et la surface de dépôt (16) de telle sorte qu'une distance prédéfinie est présente entre le dispositif de réception (14) et la couche mémoire (12) déposée sur la surface de dépôt (16).

3. Dispositif selon la revendication 1 ou 2, **caractérisé en ce qu'**il présente également un dispositif d'entraînement pour générer un déplacement relatif entre le dispositif de réception (14) et la couche mémoire (12) et un moyen de guidage (20a, 20b) pour le guidage du dispositif de réception (14) ou de la couche mémoire (12) sur une surface de guidage (16) pendant la génération du déplacement relatif.

4. Dispositif selon la revendication 3, **caractérisé en ce que** la surface de guidage (16) est indépendante de la couche mémoire (12).

5. Dispositif selon la revendication 3 ou 4, **caractérisé en ce que** l'unité de réglage (18) présente une broche (69), en particulier avec deux éléments de liaison (62a, 62b) guidés en parallèle, qui sont reliés au moyen de guidage (20a, 20b) de telle sorte que le dispositif de réception (14) peut tourner autour d'un point de liaison (64a, 64b) avec le moyen de guidage (20a, 20b).

6. Dispositif selon l'une quelconque des revendications 3 à 5, **caractérisé en ce qu'**un plan x-y est défini par la surface de dépôt (16), le dispositif d'entraînement est conçu de telle sorte qu'il génère le déplacement relatif dans la direction x, et le dispositif présente au moins deux unités de réglage (18a, 18b, 20a, 20b), une première unité de réglage (18a, 20a) étant disposée dans la direction y sur un côté du dispositif de réception (14) et une seconde unité de réglage (18a, 20b) sur l'autre côté du dispositif de réception (14).

7. Dispositif selon l'une quelconque des revendications précédentes, **caractérisé en ce qu'**une unité de commande (15) est présente pour contrôler ou régler la distance et l'unité de réglage (18) est reliée à l'unité de commande (15).

8. Dispositif selon l'une quelconque des revendications précédentes, **caractérisé en ce que** l'unité de réglage (18) comprend un élément de normalisation (22), en particulier un palpeur de précision, pour déterminer la position de la surface de la couche mémoire (12) déposée sur la surface de dépôt (16).

9. Dispositif selon la revendication 8, **caractérisé en ce que** l'unité de réglage (18) est conçue de telle sorte qu'elle règle à partir de la position déterminée de la surface de la couche mémoire la distance prédéfinie entre le dispositif de réception (14) et la couche mémoire (12).

10. Dispositif selon l'une quelconque des revendications 8 ou 9, **caractérisé en ce qu'**il présente une mémoire (17) pour la mémorisation de la position déterminée de la surface de la couche mémoire (12) ou une mémorisation de la position du dispositif de réception (14) après le réglage de la distance prédéfinie.

11. Dispositif selon la revendication 10, **caractérisé en ce que** l'unité de réglage (18) est conçue de telle sorte que l'ajustage de la distance prédéfinie pour la lecture de la couche mémoire (12) au moyen de la position, mémorisée auparavant dans la mémoire (17), de la surface de la couche mémoire (12) ou de la position, mémorisée auparavant dans la mémoire (17), du dispositif de réception (14) s'effectue après le réglage de la distance prédéfinie.

12. Procédé pour lire des informations stockées dans une couche mémoire (12), comprenant les étapes suivantes :
dépose de la couche mémoire (12) sur une surface de dépôt (16) et réception d'un rayonnement d'émission émis par la couche mémoire (12) au moyen d'un dispositif de réception (14),
**caractérisé en ce qu'**une distance entre le dispositif de réception (14) et la surface de dépôt (16) est réglée de façon variable, le dispositif de réception (14) étant fixé au moyen d'au moins un palier d'air (30a-30d) sur la surface de dépôt (16) et une fente d'air étant réalisée entre le palier d'air (30a-30d) et la surface de dépôt (16) pendant le fonctionnement du dispositif (10).

13. Procédé selon la revendication 12, **caractérisé en ce que** la position de la surface de la couche mémoire (12) est déterminée et la distance prédéfinie est réglée en connaissant cette position.

14. Procédé selon l'une des revendications 12 ou 13, **caractérisé en ce que** le réglage de la distance prédéfinie est répété pendant une opération de lecture.
